# EUROPEAN PATENT APPLICATION

(11) **EP 4 231 043 A2**
(43) Date of publication of application: **23.08.2023**
(21) Application number: 23152765.6
(22) Date of filing: 20.01.2023
(51) Int. Cl.: G01S 7/02, G01S 7/03, H01Q 15/16, H01Q 15/18, H01Q 15/14, G01S 13/00, H01Q 19/10, G01S 13/04, G01S 13/56

(54) **RADAR SYSTEM, DEVICE COMPRISING A RADAR SYSTEM AND METHOD FOR OPERATING A RADAR SYSTEM**

(30) Priority: 22.02.2022 EP 22158073
(71) Applicant: Infineon Technologies AG, 85579 Neubiberg (DE)
(72) Inventor: DORFNER, Andreas, 85591 Vaterstetten (DE)
(74) Representative: 2SPL Patentanwälte PartG mbB

(57) **Abstract**

A radar system is proposed. The radar system comprises a radar sensor comprising a first antenna configured to emit a radar beam towards a predefined region. The radar system comprises a reflector spaced apart from the radar sensor and configured to redirect at least part of the radar beam towards a target region different from the predefined region. The radar sensor comprises a second antenna configured to receive a reflection of the radar beam originating from the target region.

## Description

### Field

The present disclosure relates to radar. Examples relate to a radar system, a device comprising a radar system and a method for operating a radar system.

### Background

A radar system typically has a limited field of view which does not cover a detection range of more than 120 degrees around the radar system with a single radar sensor. Besides, some applications may require a radar system to exclude certain parts of the field of view from detection. Hence, there may be a demand for improved radar sensing.

### Summary

The demand may be satisfied by the subject matter of the appended independent claims.

Some aspects of the present disclosure relate to a radar system comprising a radar sensor comprising a first antenna configured to emit a radar beam towards a predefined region, and a reflector spaced apart from the radar sensor and configured to redirect at least part of the radar beam towards a target region different from the predefined region, wherein the radar sensor comprises a second antenna configured to receive a reflection of the radar beam originating from the target region.

Some aspects of the present disclosure relate to an electronic device comprising a radar system as described herein, and control circuitry configured to control an operation of the electronic device based on an output signal of the radar system.

Some aspects of the present disclosure relate to a method for operating a radar system comprising a radar sensor and a reflector spaced apart from the radar sensor, the method comprising emitting, at a first antenna of the radar sensor, a radar beam towards a predefined region, redirecting, using the reflector, the radar beam towards a target region different from the predefined region, and receiving, at a second antenna of the radar sensor, a reflection of the radar beam originating from the target region.

### Brief description of the Figures

Some examples of apparatuses and/or methods will be described in the following by way of example only, and with reference to the accompanying figures, in which
Fig. 1a and Fig. 1b illustrate an example of a radar system for a transmission and a reception of radar waves, respectively;
Figs. 2a to 2d illustrate another example of a radar system with a symmetrical arrangement of the antennas;
Figs. 3a to 3c illustrate another example of a radar system with differing redirection angles;
Fig. 4 illustrates another example of a radar system with a partial redirection of a radar beam;
Figs. 5a to 5f illustrate another example of a radar system with and without a reflector, a respective three-dimensional radiation pattern and a respective polar diagram;
Figs. 6a to 6c illustrate another example of a radar system with a displaced reflector, a corresponding three-dimensional radiation pattern and polar diagram;
Figs. 7a to 7c illustrate another example of a radar system with a prismatic reflector, a corresponding three-dimensional radiation pattern and polar diagram;
Fig. 8 illustrates an example of an electronic device comprising a radar system; and
Fig. 9 illustrates a flowchart of an example of a method for operating a radar system.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

It is to be noted that any feature of a radar system described herein referring to a geometric concept, such as symmetry, parallelism, orthogonality, flatness, straightness, or to a geometric shape is to be understood within the limits of manufacturing or mounting tolerances.

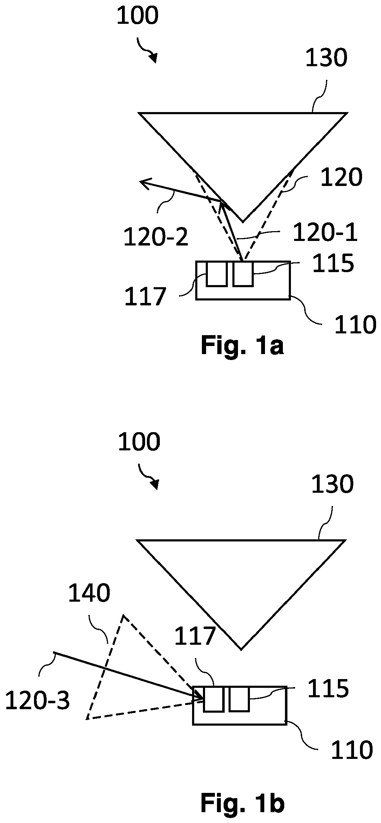

**Fig. 1a** and **Fig. 1b** illustrate a schematic representation of an example of a radar system 100 for a transmission and a reception of radar waves, respectively. It is to be noted that the transmission and reception of radar waves is illustrated in Fig. 1a and Fig. 1b separately for illustrative purposes only. The transmission and reception of radar waves may, in some examples, be performed simultaneously by the radar system 100.

The radar system 100 comprises a radar sensor 110. The radar sensor 110 may be any device suitable for emitting and receiving a radio-frequency electromagnetic signal, e.g., a radar transceiver. The radar sensor 110 comprises a first antenna 115 (Tx antenna) configured to radiate a radar beam 120. The first antenna 115 may be a conductor of any kind capable of converting wire-bound electric energy into a free-propagating radar wave. For instance, the first antenna 115 may be a patch-antenna integrated into the radar sensor 110.

The first antenna 115 is configured to emit the radar beam 120 towards a predefined region. For instance, the antenna 115 may be a directional antenna such as a phased-array antenna, which allows the radiation power to be concentrated onto a certain direction, yielding an increased radar signal strength in a certain area (the predefined region) extending along the said direction. The predefined region may correspond to a region covered by the radar beam 120 when the radar sensor 110 is operated as a standalone system (without the reflector explained below).

The radar beam 120 emitted by the first antenna 115 is not to be understood as a beam in an optical sense. It may rather correspond to a space through which the radar radiation mainly propagates or a main lobe of the radar radiation, e.g., a portion of the entire radar radiation emitted by the first antenna 115 with a higher field strength compared to other lobes which appear in a radiation pattern of the first antenna 115. For instance, the first antenna 115 may exhibit a phase center or apparent phase center from which the radar beam 120 spreads spherically outward. For instance, the radar beam 120 may correspond to an original field of view of the first antenna 115, e.g., to approximately a half power beam width of the radar radiation (e.g., -3 decibel from a center of the radar radiation).

By way of illustration, in Fig. 1a and Fig. 1b, the radar beam 120 is illustrated as a cone with a tip pointing towards the first antenna 115. In other examples, the radar beam 120 may exhibit any other three-dimensional shape. For instance, the radar beam 120 may exhibit any other conical shape or a cone section.

An example of a first trajectory 120-1 of the radar beam 120 is illustrated in Fig. 1a. The first trajectory 120-1 may be considered a field vector of a partial energy flow of the radar beam 120 which is perpendicular to a radar wavefront of the radar beam 120. The first trajectory 120-1 emanates from a phase center of the first antenna 115 and points towards the predefined region.

The radar system 100 further comprises a reflector 130 spaced apart from the radar sensor 110. The reflector 130 is configured to redirect at least part of the radar beam 120 towards a target region. For instance, an outer surface of the reflector 130 may be configured to redirect the at least part of the radar beam 120. A reflection of the first trajectory 120-1 at the reflector 130 yields a second trajectory 120-2 heading towards the target region.

The reflector 130 may be any structure with a surface reflective for a partial or entire radar frequency range of the radar beam 120. For instance, the reflector 130 may be selected according to a desired reflection behavior of its surface. For instance, at least part of an outer surface of the reflector 130 may be metallic to cause a reflection of an incident part of the radar beam 120.

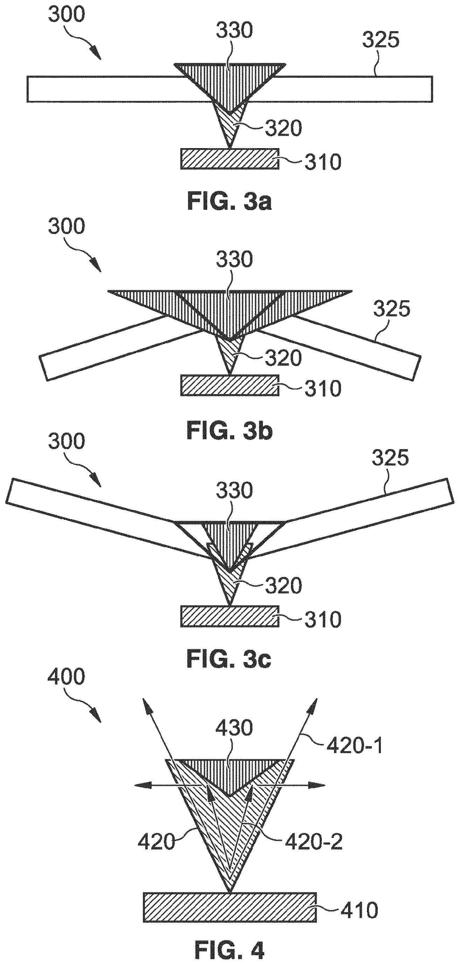

By way of illustration, in Fig. 1a and Fig. 1b, the reflector 130 is illustrated by a triangular symbol arranged with its tip oriented towards a phase center of the first antenna 115 and centered relative to the radar beam 120. It is to be noted that in other examples the reflector 130 may be of any other shape or may be sized or arranged in any other way relative to the first antenna 115 than shown in Fig. 1a and Fig. 1b. For further elaborating on the material, shape, size, and position of the reflector 130 in accordance with the present disclosure, further examples are explained below and with reference to Figs. 3a to 3c, 4, 5a to 5f, 6a to 6c, and 7a to 7c.

In Fig. 1a, the reflector 130 deviates the first trajectory 120-1 towards the predefined region when it impinges on the surface of the reflector 130. The deviation causes the first trajectory 120-1 to continue its transmission path along the second trajectory 120-2. The second trajectory 120-2 emanates from an impact point on the surface of the reflector 130 and points to the target region.

The target region may be considered a synthetic field of view of the radar system 100 which at least partly differs from the original predefined region and results from the redirection of the radar beam 120. The redirection of the radar beam 120 may therefore enable a spatial shift of the detectable region of the radar sensor 110. The target region may be considered a detection zone for which the radar sensor 110 in combination with the reflector 130 exhibits a desirable sensitivity or accuracy for accomplishing a certain radar task. In case only part of the radar beam 120 is redirected by the reflector 130, the radar system 100 may maintain a sensitivity for at least part of the original field of view of the radar sensor 110.

The target region is different from the predefined region in a sense that the target region at least includes one region outside the predefined region. In other words, the target region may be at least partly overlapping or may entirely be outside the predefined region. The target region may be of any shape or size and may include several separated subregions. For instance, the target region may comprise two subregions which are opposing with respect to a phase center of the first antenna 115. In some examples, the target region may extend over at least 120 degrees along a plane parallel to an emitting surface of the first antenna 115 when viewed from a phase center of the first antenna 115. The emitting surface may correspond to an orientation of the radar sensor 110, e.g., a radar sensor facing vertically upwards may have a horizontal emitting surface. A typical radar sensor may have a field of view limited to an angular range of up to approximately 120 degrees due to the antenna design. The radar sensor 110 combined with the reflector 130 may widen up this limited angular range. In radar applications where an angular range of more than 120 degrees shall be covered, the radar system 100 may be a more cost-effective alternative to using multiple radar sensors.

In a concrete application, the radar sensor 110 may be placed along a horizontal plane and facing upwards causing the main radiation of the radar beam 120 accordingly facing upwards. The arrangement of the radar sensor 110 and its resulting orientation may, for instance, be selected based on fabrication or design considerations. The predefined region would then be located above the radar sensor 110. However, the application may require a detection of objects, e.g., in an angular range of 360 degrees, horizontally around the radar sensor 110. In such a case, the reflector 130 may be placed, e.g., centered, above the phase center of the radar sensor 110. Optionally, the reflector 130 may be constructed symmetrically with respect to the phase center to evenly distribute the radar power of the redirected radar radiation over the angular range of 360 degrees. The latter may ensure that no spatial angle would be preferred.

In the example of Fig. 1a, the second trajectory 120-2 is tilted by approximately 120 degrees with respect to the first trajectory 120-1 which may lead to a thereto corresponding spatial shift of the target region. Hence, an imaginary line between the phase center of the first antenna 115 and the tip of the first trajectory 120-1 (pointing towards the predefined region) may be tilted by approximately 30 degrees with respect to an imaginary line between the phase center and the tip of the second trajectory 120-1 (pointing towards the target region).

In other examples, the tilt angle between a trajectory of the radar beam 120 and the redirected counterpart of the trajectory may be different than the one shown in Fig. 1a. In some examples, an imaginary line between the phase center of the first antenna 115 and any boundary point of the predefined region is tilted by at least 10 degrees with respect to an imaginary line between the phase center and any boundary point of the target region. The tilt angle may be determined by the angle of incidence for trajectories of the radar beam 120 impinging on the reflector 130. More specifically, the tilt angle may be (mainly) determined by a shape and position of the reflector 130 relative to the phase center of the first antenna 115. The tilt angle of the target region with respect to the predefined region may, on the one hand, exclude from detection a first solid angle (at least part of the predefined region) viewed from the phase center of the first antenna 115 and, on the other hand, include a second solid angle range (the target region) into detection. Thus, the detectable region of the radar system 100 may be shifted beyond the boundary of the original field of view of the radar sensor 110.

The radar sensor 110 further comprises a second antenna 117 (Rx antenna) configured to receive a reflection of the radar beam 120 within a field of view 140 of the second antenna 117 and originating from the target region, as illustrated in Fig. 1b. Assuming the second trajectory 120-2 of Fig. 1a (or any other trajectory of the radar beam 120) impinges on an object within the target region, the trajectory 120-2 may reflect off of the object, yielding a third trajectory 120-3 being part of the reflection. Thus, the third trajectory 120-3 emanates from the impact point on a surface of the object and points back to the second antenna 117.

The trajectories 120-1, 120-2 and 120-3 of Fig. 1a and Fig. 1b are used for illustrative purposes only. In other examples, the second trajectory 120-2 may cross the target region without impinging on a target, thus, no reflection in form of the third trajectory 120-3 may occur. The radar beam 120 and the reflection may, additionally, include further trajectories.

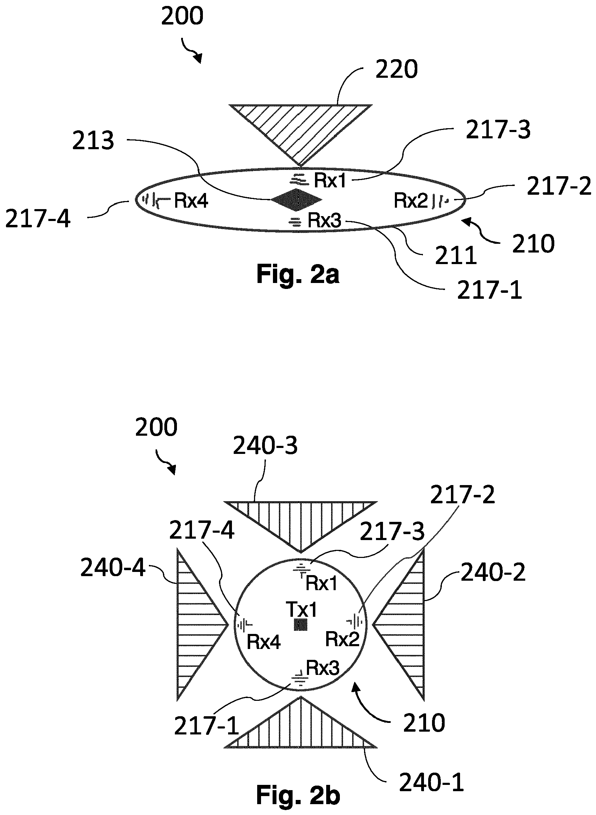

The second antenna 117 may be configured to receive the reflection within its field of view 140 which may differ from a region covered by a main lobe (e.g., by the radar beam 120) of the first antenna 115. For instance, the first antenna 115 and the second antenna 117 may be of different types or structures and/or they may be spaced apart from each other. By way of illustration, in Fig. 1b, the second antenna 117 is arranged left of the first antenna 115 with a certain spacing. In other examples, the first antenna 115 and the second antenna 117 may have any other arrangement and spacing relative to each other than the one shown in Fig. 1b. Further examples of an arrangement and spacing of the first antenna 115 and the second antenna 117 relative to each other are explained below and with reference to Figs. 2a to 2d. The bistatic approach using a separate receiving antenna 117 may improve the accuracy of the radar system 100, especially, for lateral detection (i.e., a detection in a region mainly radial to a beam axis of the radar beam 120) while only needing one emitting antenna 115.

In Fig. 1b, the field of view 140 is illustrated as a cone tilted relative to a horizontal plane (a plane parallel to an emitting surface of the first antenna 115) by way of illustration. In other examples than the one shown in Fig. 1b, the field of view 140 may have a different shape, size or inclination. For instance, the field of view 140 may be substantially symmetrical relative to the horizontal plane, i.e., exhibit no inclination. The field of view 140 may be determined by a structure, arrangement or orientation of the second antenna 117.

The second antenna 117 may, in some examples, be configured to receive a direct reflection of the radar beam 120 originating from the target region. For instance, the second antenna 117 may receive the direct reflection from the target region without an intermediate reflection at the reflector 130. The second antenna 117 may, for instance, be oriented at least partly towards the target region, resulting in a field of view 140 covering at least part of the target region. A part of the reflection at an object in the target region may therefore directly head back to the second antenna 117 without impinging on the reflector 130 (again). Alternatively, the reflector 130 is configured to redirect at least part of the reflection onto the second antenna 117. For instance, the second antenna 117 may receive the direct reflection from the target region and additionally the redirected part of the reflection. The direct reception of the reflection without another impingement on the reflector 130 may further maintain the directional information of the reflection.

The second antenna 117 may, in some examples, be directed (at least partly) horizontally towards the target region, e.g., its field of view or main lobe may be tilted by, e.g., 70, 80 or 90 degrees, relative to the radar beam 120 of the first antenna 115. The latter may be achieved by selecting the configuration, orientation and/or position of the second antenna 117 accordingly. For example, the second antenna 117 maybe an endfire antenna. In this manner, the manufacturing and mounting of the first antenna 115 and the second antenna 117 may be simplified and their arrangement may be more space-saving.

In case of an endfire antenna, the second antenna 117 may comprise multiple (e.g., identical) antenna elements that are placed parallelly to each other, e.g., along a normal to axes of the second antenna 117. The second antenna 117 may have a field of view mainly directed to a side of the radar sensor 110, thus, the reflection may be mainly received (or the second antenna 117 may be oriented) along an axis of the second antenna 117 or along a plane parallel to an emitting surface of the first antenna 115. An example of an endfire antenna maybe a yagi (yagi-Uda) antenna. In the latter case, the second antenna 117 may, e.g., comprise multiple parallel and resonant antenna elements, e.g., metal rods, in an endfire array. For instance, at least one of the elements may be a driven element coupled to a receiver element through a transmission line and at least one of the elements may be a reflector. Optionally, one of the elements may be a parasitic element (passive radiator) without electrical connection and one of the elements may be a director.

The radar sensor 110 may comprise, in some examples, at least two second antennas (comprising the second antenna 117) configured to receive the reflection of the radar beam 120 from respective subregions of the target region. The subregions may be discontiguous or overlapping areas in a surrounding of the radar system 100. Each subregion may correspond to a field of view of a respective second antenna. For instance, the number of second antennas and their position relative to each other and to the first antenna 115 may be chosen such that their field of views cover the target region. The at least two second antennas may, e.g., be distributed over an area around the first antenna 115. For instance, the at least two second antennas may be arranged next to the first antenna 115 and on different, e.g., opposing, sides of the first antenna 115. The implementation of more than one second antenna may increase the angular range in which the radar system 100 is able to detect objects or increase the accuracy/resolution of the radar system 100. The multiple second antennas may further provide directional information of the received reflection. For instance, the difference in signal strength between signals received by the second antennas may indicate a direction of the signals.

The orientation of the multiple second antennas may be chosen to exclude certain areas from detection (areas to which the second antennas are not oriented to) or to increase the sensitivity of the detection for certain regions (the subregions). This may depend on the specific radar application which, e.g., aims at a 90, 120 or 360 degrees view or alike, a view onto two opposing sides of the radar sensor 110, a horizontal view (mainly along a plane through the emitting surface of the radar sensor 110) or a tilted view (upwards or downwards) with respect to the plane through the emitting surface. The radar system 100 may, in such cases, be beneficial for focusing the detection onto the desired target region or subregions and may provide the possibility to customize the target region independently of the orientation of the emitting antenna 115.

Two examples for radar applications are given in the following: In a first example, the target region shall comprise two subregions which are opposing with respect to a phase center of the first antenna 115, then, two second antennas may be placed opposing to each other relative to the first antenna 115 (on two opposing sides of the first antenna 115) and may receive a reflection from a first one of the subregions and a second one of the subregions, respectively. For instance, the multiple second antennas may be configured to receive the reflection of the radar beam 120 exclusively from a respective one of the two subregions. Likewise, in a second example where the target region shall extend over at least 120 degrees along a plane parallel to an emitting surface of the first antenna 115 when viewed from a phase center of the first antenna 115, the at least two second antennas may be configured to receive the reflection of the radar beam 120 exclusively from a respective subregion of the target region extending over at least 60 degrees along the plane parallel to the emitting surface.

In the following, examples for the arrangement of the antennas are given: The radar system 100 may, for instance, comprise a printed circuit board (PCB) in or on which the first antenna 115 and the second antenna 117 are arranged. In case of multiple second antennas, they may be spread over the PCB, e.g., in a regular manner. If the target region extends over, e.g., 120 degrees along a plane parallel to an emitting surface of the first antenna 115, the second antennas may be arranged on an area of the PCB extending over a solid angle of 120 degrees viewed from a phase center of the first antenna 115. In some examples, the target region extends over 360 degrees along the plane parallel to the emitting surface. In the latter example, the radar sensor 110 may comprise at least four second antennas configured to receive the reflection of the radar beam exclusively from a respective subregion of the target region extending over at least 90 degrees along the plane parallel to the emitting surface. The second antennas may be arranged on opposing sides relative to the first antenna 115 covering an angle of 360 degrees on the PCB viewed from the phase center of the first antenna 115. It is to be noted that the at least 120 degrees or 360 degrees view may also be realized with one second antenna 117 or any other number n ≥ 2 second antennas.

The radar system 100 may, in some examples, further comprise a semiconductor die, e.g., an MMIC (monolithic microwave integrated circuit), arranged in or on the PCB. At least one physical channel (or port) of the radar sensor coupled to at least one of the first antenna 115 and the second antenna 117 may be integrated into the semiconductor die. The physical channel may, for instance, be a downlink or uplink channel. For instance, the physical channel may provide a resource for carrying a signal from a higher layer to a physical layer of the radar sensor 110 or vice versa. At least one of the first antenna 115 and the second antenna 117 may be external to the semiconductor die. This may increase the flexibility in the configuration and arrangement of the first antenna 115 and the second antenna 117. Further, the cost and dimensions of the radar system 100 may be decreased by using a single integrated circuit and a single PCB.

The second antenna 117 may, in some examples, be arranged on an edge area of the PCB. The edge area may be an area close to an edge of the PCB, e.g., closer than a few (e.g., two or more) wavelengths of the radar radiation (radar beam 120) to the edge. For instance, the second antenna 117 may be arranged close to the edge such that its main lobe covers the edge of the PCB. The second antenna 117 may, for instance, be arranged closer to the edge than to the first antenna 115. For instance, the second antenna 117 may be arranged so close to an edge of the PCB that ideally no or less interfering components (e.g., conductive material such as metal (copper) for a ground layer of the PCB) are arranged on the PCB between the second antenna 117 and the edge. A material between the second antenna 117 and the edge may further exhibit homogenous material properties for preventing disturbance of the operation of the second antenna 117. Further, the second antenna 117 may have enough distance to potentially interfering electrical components of the PCB. The second antenna 117 may thus be protected from undesired interference or blocking of its reception.

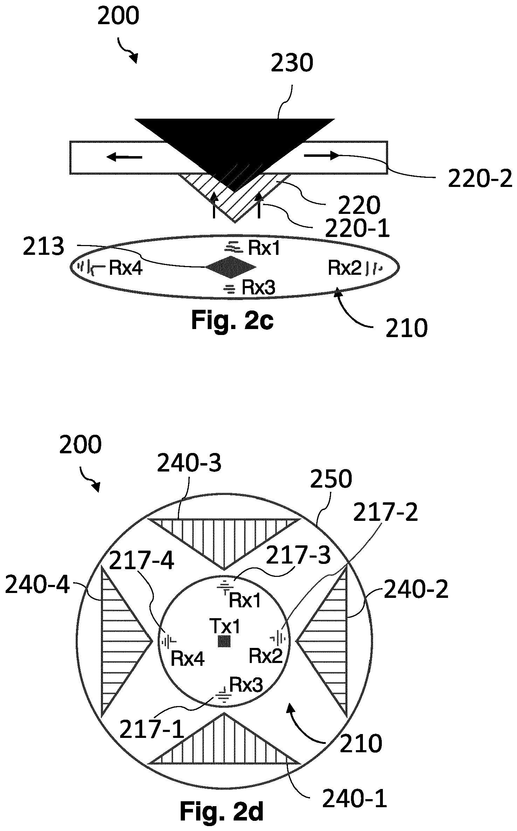

In some examples, the radar sensor 110 comprises at least four second antennas configured to receive the reflection of the radar beam 120. The at least four second antennas may be arranged symmetrically on the PCB with respect to the first antenna 115. An example of such a symmetrical arrangement is further explained with reference to **Figs. 2a to 2d.** Figs. 2a to 2d illustrate an example of a radar system 200. Fig. 2a and Fig. 2c illustrate an oblique view of the radar system 200 without and with reflector 230, respectively, whereas Fig. 2b and Fig. 2d illustrate a top view of the radar system 200 without and with a reflection 250 of a radar beam 220, respectively.

The radar system 200 comprises a radar sensor 210 which comprises a semiconductor die 213 integrating a first antenna. The first antenna is configured to emit the radar beam 220 towards a predefined region. The first antenna is oriented upwards in Fig. 2a and Fig. 2c, thus, emitting the radar beam 220 (main lobe) upwards (or vertical), perpendicular to an emitting surface of the first antenna.

The radar system 200 further comprises the reflector 230 spaced apart from the radar sensor 210 and configured to redirect at least part of the radar beam 220 towards a target region different from the predefined region. In the example of Fig. 2c, the reflector 230 redirects the vertical radar beam 220 to a horizontal target region. For instance, the reflector 230 redirects a vertical first trajectory 220-1 of the radar beam 220, yielding a horizontal second trajectory 220-2.

The radar sensor 200 further comprises a PCB 211 onto which four second antennas 217-1, 217-2, 217-3 and 217-4 are arranged on. The four second antennas 217-1, 217-2, 217-3 and 217-4 are arranged on an edge area of the PCB 211 and are arranged axially symmetrical on the PCB 211 with the semiconductor die 213 in their center. The four second antennas 217-1, 217-2, 217-3 and 217-4 are arranged with uniform spacings between opposing ones of the four second antennas 217-1, 217-2, 217-3 and 217-4.

The second antennas 217-1, 217-2, 217-3 and 217-4 are configured to receive the reflection 250 of the radar beam 220 originating from the target region. The four second antennas 217-1, 217-2, 217-3 and 217-4 are yagi antennas, and each of the second antennas 217-1, 217-2, 217-3 and 217-4 receives the reflection 250 within a respective field of view 240-1, 240-2, 240-3 and 240-4 which is oriented horizontally. This may enable a 360 degrees horizontal view with a vertically oriented emitting antenna. The symmetrical arrangement may enable a uniform detection over the 360 degrees where no angle is preferred.

In the example of Figs. 2a to 2d, the reflector 130 may homogenously distribute the radar beam 220 to all directions within a horizontal plane. Thus, the target region extends over 360 degrees along a plane parallel to an emitting surface of the first antenna. The four second antennas 217-1, 217-2, 217-3 and 217-4 are configured to receive the reflection 250 of the radar beam 220 exclusively from a respective subregion of the target region (corresponding to the field of views 240-1, 240-2, 240-3 and 240-4) extending over at least 90 degrees along the plane parallel to the emitting surface. The selection of four second antennas for realizing the 360 degrees may, on the one hand, increase the accuracy of the radar system 200 and, on the other hand, keep the number of antennas low for cost reduction. In other examples, however, the radar sensor 210 may comprise more than four second antennas. For instance, further second antennas may be placed along the edge area of the PCB 211. The further second antennas may be placed between the four second antennas 217-1, 217-2, 217-3 and 217-4 along the edge area, e.g., in regular spacings to neighboring second antennas. Increasing the number of second (Rx) antennas may improve the resolution of the angle to a position of an object.

Referring back to Fig. 1a and Fig. 1b, the reflector 130 is further described in the following. Such as shown by Fig. 1a and Fig. 1b, the reflector 130 may taper towards the radar sensor 110. For instance, the reflector 130 may taper in an apex or edge towards the radar sensor 110. For instance, the reflector 130 may exhibit a conical or pyramidal shape with an apex or a prismatic shape with an edge pointing towards the radar sensor 110. This may be beneficial since, ideally, no part of the initial radar beam 120 or only a negligibly small portion of the radar beam 120 (e.g., less than 1%) impinging on the surface of the reflector 130 is directly reflected back to the radar sensor 110. In other words, an angle of incidence between the radar beam 120 and the surface of the reflector 130 may differ, e.g., by more than 0,1% from 90 degrees. The reflector 130 may be designed such that the tapering is sharp enough to prevent or sufficiently reduce the aforesaid direct reflections onto the first antenna 115. This may prevent a potentially undesirable increase of sensitivity of the radar system 100 to false targets or vibrations, or a reduction of sensitivity to the actual target.

The redirection of the radar beam 120 is based on reflection at a surface of the reflector 130, thus, an angle of reflection between the surface of the reflector 130 and a redirected trajectory may correspond to an angle of incidence between the surface of the reflector 130 and an impinging trajectory. Consequently, the shape of the reflector 130 and the position of the reflector 130 relative to the radar beam 120 may be selected according to a desired shape and position of the target region. The selection of the reflector 130 for matching a certain application may be independent of an operating frequency of the radar sensor 110. The reflector 130 may, therefore, introduce no limitations regarding a bandwidth and may be used in wideband operations. The design of the reflector 130 may easily be transferred to any other configuration of a radar system according to the present disclosure. The shape of the reflector 130 may be independent of a specific antenna type. Thus, the radar system 100 may be adjustable to a wide variety of applications requiring different operation frequencies or antenna types.

Examples of how the shape of the reflector 130 may influence the position of the target region relative to the radar sensor 110 is explained with reference to **Fig. 3a** to **Fig. 3c** which illustrate a sectional view of an example of a radar system 300 with different redirection angles between a radar beam 320 emitted by a radar sensor 310 and a reflected radar signal 325 after impinging on a reflector 330. The radar sensor 310 comprises a first antenna configured to emit the radar beam 320 towards a predefined region. The reflector 330 is configured to redirect at least part of the radar beam 320 towards a target region different from the predefined region. The radar sensor 310 further comprises a second antenna (not shown) configured to receive a reflection of the radar beam 320.

In Fig. 3a to Fig. 3c, a cross section of the reflector 330 is illustrated by a triangle, i.e., the reflector 330 may exhibit, e.g., a pyramidal, prismatic, or conic shape. In Fig. 3a, an opening angle of a tapering of the reflector 330 towards the radar sensor 310 may cause the redirection angle to range between approximately 60 degrees to 90 degrees, thus, causing the reflected radar signal 325 spreading mainly over a plane parallel to an emitting surface of the radar sensor 310. In Fig. 3b, the tapering is less pointed than that of Fig. 3a, i.e., the opening angle of the tapering is bigger, which causes the reflected radar signal 325 to be tilted towards a plane along the emitting surface (more downwards). In Fig. 3c, the tapering is more pointed than that of Fig. 3a, i.e., the opening angle of the tapering is smaller, which causes the reflected radar signal 325 to be tilted away from the plane along the emitting surface (more upwards).

By selecting a suitable shape of the reflector 330, any desired redirection angle may be realized. The redirection angle may define a position of the target region in a way that an imaginary line between a phase center of the first antenna and any boundary point of the predefined region may be tilted with respect to an imaginary line between the phase center and any boundary point of the target region by an angle corresponding to the redirection angle. For instance, the imaginary line between the phase center of the first antenna and any boundary point of the predefined region may be tilted by at least 10 degrees with respect to the imaginary line between the phase center and any boundary point of the target region.

The radar system 300 may allow a redirection of the radar beam 320 towards a target region matching a particular radar application. The radar system 300 may provide simple means -by selecting a suitable shape of the reflector 330 - to adapt the target region to the radar application. The radar system 300 may enable detection of objects lateral to the radar sensor 310, e.g., along a plane parallel to an emitting surface of the radar sensor 310.

Referring back to Fig. 1a and Fig. 1b, the reflector 130 or, in particular, a surface of the reflector 130 may be symmetrical with respect to a line of symmetry or a plane of symmetry. The reflector 130 may exhibit a shape of, e.g., a cone, pyramid, or prism with a symmetrical base plane such as provided by a regular pyramid, a regular prism, or a circular cone. The line of symmetry or the plane of symmetry may run through a point of symmetry of the base plane and an apex or edge of the reflector 130. The line of symmetry or the plane of symmetry may be parallel to a beam axis of the radar beam 120. The beam axis may be understood as imaginary line through the phase center of the first antenna 115 and the centroid of a wavefront of the radar beam 120. Such a symmetrical structure of the reflector 130 may enable a uniform distribution of radiation power over the target region.

The reflector 130 redirects such parts of the radar beam 120 which impinge on a reflecting surface of the reflector 130. The share of radiation power being redirected by the reflector 130 may depend, among other things, on at least one of the extent of the reflector 130, the distance between the reflector 130, the phase center of the first antenna 115, and the beam width of the radar beam 120. For instance, in the example shown in Fig. 1a and Fig. 1b, the reflector 130 spatially extends over an entire beamwidth of the radar beam 120 (i.e., an extent of the radar beam 120 measured along a wavefront of the radar beam 120) and may, therefore, redirect substantially the entire radar beam 120 towards the target region. The latter may especially be beneficial for applications where objects in the predefined region shall be explicitly excluded from detection or where the radiation power spread over the target region shall be increased.

However, in cases where the reflector 130 - different from the one shown in Fig. 1a and Fig. 1b - spatially covers only part of a beamwidth of the radar beam 120, the reflector 130 may redirect only a certain portion of the radar beam 120 towards the target region, such as at least 80% or 90% of the entire power of the radar beam 120, and let pass the remaining portion of the radar beam 120 towards the predefined region. This may lead to a remaining sensitivity of the radar system 100 for the predefined region which may be advantageous for applications where a target object located in the predefined region or the target region shall be detectable. An example of such a partly covering reflector is described with reference to **Fig. 4** which illustrates a sectional view of an example of a radar system 400. The radar system 400 comprises a radar sensor 410 with a first antenna configured to emit a radar beam 420 towards a predefined region. The radar system 400 comprises a reflector 430 configured to redirect at least part of the radar beam 420 towards a target region different from the predefined region.

Since the reflector 430 does not cover an entire beamwidth (extent) of the radar beam 420, some parts of the radar beam 420, e.g., a first trajectory 420-1 of the radar beam 420, partially passes the reflector 430 without being redirected, thus, the first trajectory 420-1 is not affected by the reflector 430 and points to the predefined region. Consequently, the radar system 400 may exhibit a sensitivity for the target region as well as for parts of the predefined region. For instance, a receiving second antenna of the radar sensor 410 may be oriented to the predefined region and another receiving second antenna may be oriented to the target region. The receiving antenna may therefore receive a reflection from the predefined region and the target region. Thus, the radar system 400 may still be able to detect objects above the radar sensor 410, e.g., in a boundary area of the radar beam 120 protruding over the reflector 430.

The radar system 400 may allow a modification of a region for which the radar sensor 410 would - as a standalone system - be sensitive, i.e., the radar system 400 may enable an alignment of the field of view of the radar sensor 410 to a particular application. The radar system 400 may exclude entirely or partially an original field of view of the radar sensor 410 from detection and include a customizable target region into detection.

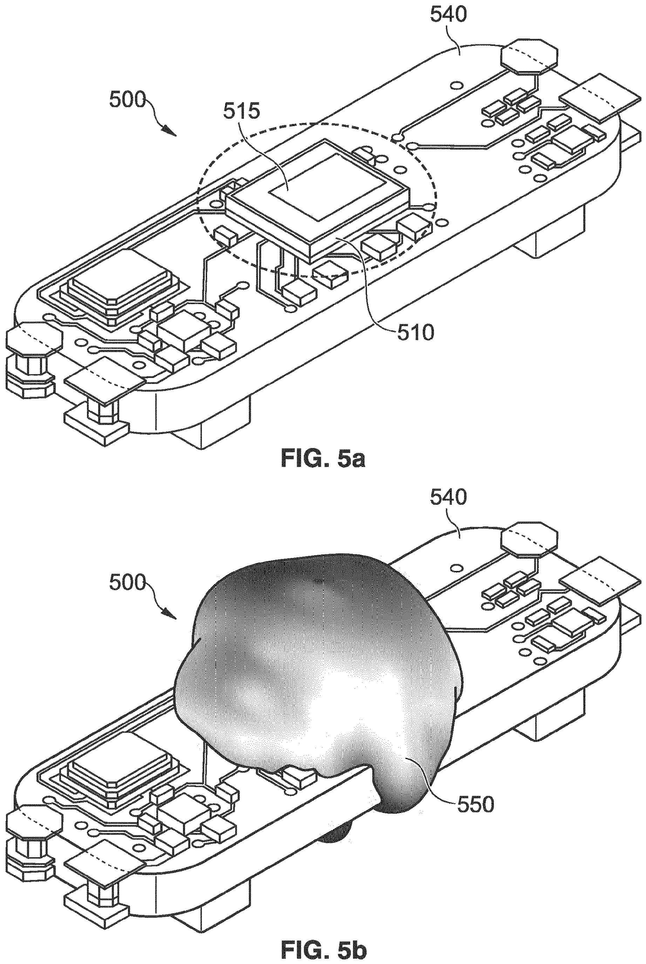

Referring back to Fig. 1a and Fig. 1b, the reflector 130 is in the example of Fig. 1a and Fig. 1b illustrated with a centered position above the radar sensor 110 and with respect to the radar beam 120. For instance, a line of symmetry or plane of symmetry of the reflector 130 may extend through a phase center of the first antenna 115. This may enable a uniform distribution of radiation power towards opposite sides of an apex or edge of the reflector 130. Another example of a centered reflector is described with reference to Figs. 5a to 5f.

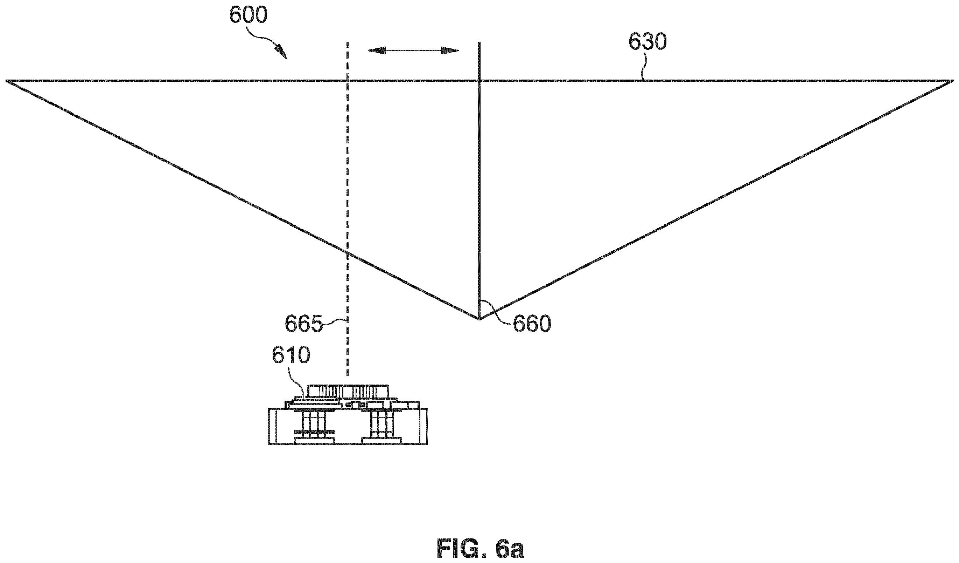

In other examples of the present disclosure, an orientation or position of the reflector 130 may differ from the one shown in Fig. 1a or Fig. 1b, e.g., a line of symmetry or plane of symmetry of the reflector 130 may be displaced with respect to the phase center of the first antenna 115 or the line/plane of symmetry of the reflector 130 may be tilted with respect to a beam axis of the radar beam 120. The displaced reflector may lead to a spreading of radiation power outwards from a certain side of the apex or edge of the reflector 130, i.e., the target region may be restricted to said side. An example of a displaced reflector is described with reference to Figs 6a to 6c.

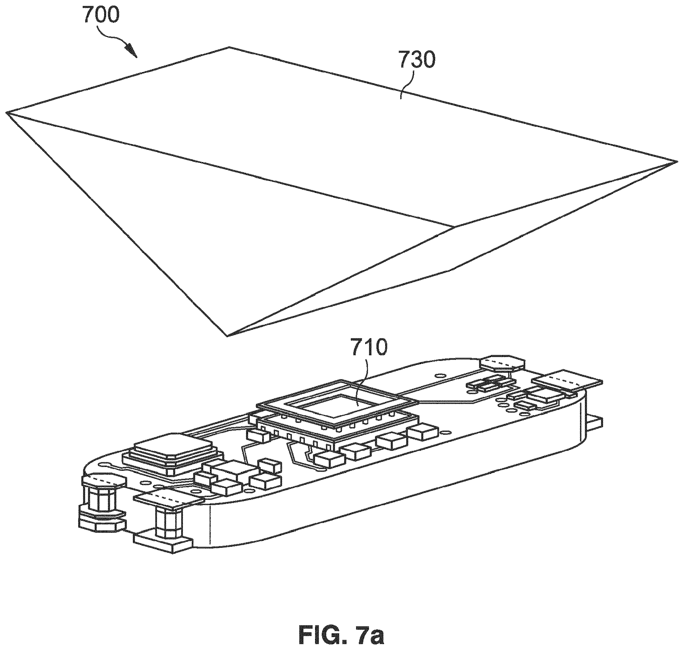

As mentioned above, the geometric shape of the reflector 130 may also influence the shape and position of the target region. An example of prismatic shaped reflector is explained with reference to Figs. 7a to 7c.

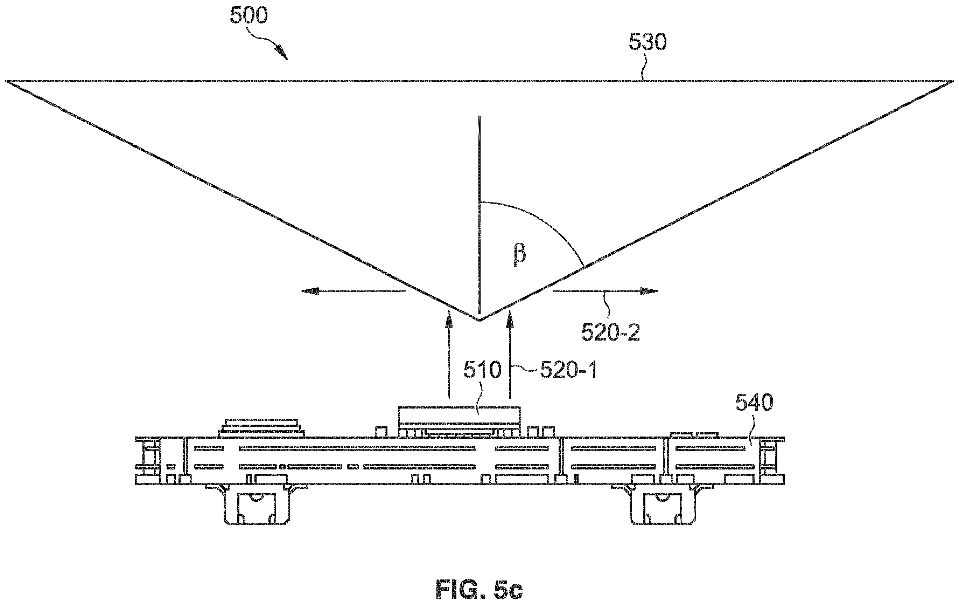

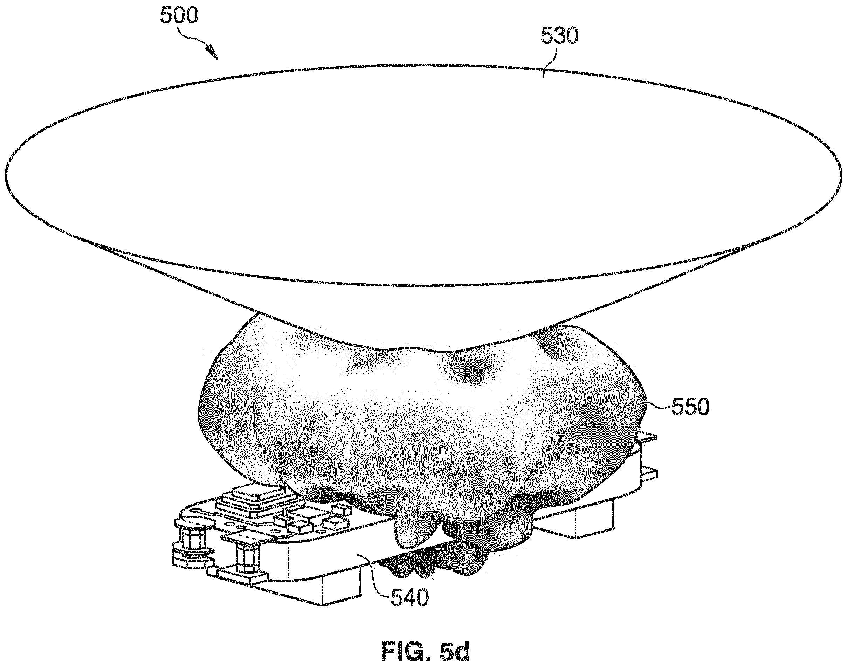

**Fig. 5a** to **Fig. 5d** illustrate an example of a radar system 500 wherein Fig. 5a, Fig. 5b and Fig. 5d show an oblique top view of the radar system 500 and Fig. 5c show a side view of the radar system 500. The radar system 500 comprises a radar sensor comprising a PCB 540. The radar sensor comprises a first antenna 515 integrated into a semiconductor die 510 configured to emit a radar beam towards a predefined region. The first antenna 515 comprises an emitting surface which is configured to emit the radar beam. The emitting surface is a surface of the first antenna 515 from which it radiates the radar beam. In Fig. 5a to Fig. 5d, the emitting surface faces vertically upwards.

For illustrating the effect of the deployment of a reflector 530 on the operation of the radar system 500, Fig. 5a and Fig. 5b show the radar system 500 without the reflector 530 whereas

Fig. 5c and Fig. 5d show the radar system 500 with the reflector 530. The reflector 530 is a rotationally symmetrical cone placed in a centered position above the first antenna and tapering towards the first antenna. A minimum distance between the reflector 530 and the first antenna 515 may be, e.g., 2,5 millimeter. A maximum distance between the reflector 530 and the first antenna 515 may be 5 centimeter. The cone angle β may be approximately 60 degrees. The reflector 530 is configured to redirect part of the radar beam, e.g., a vertical trajectory 520-1 of the radar beam, towards a target region. The reflector 530 deviates the trajectory 520-1 in an angle of approximately 90 degrees towards the target region, yielding a horizontal trajectory 520-2. The target region may, thus, extend in a horizontal plane around the radar sensor.

Fig. 5b and Fig. 5d show an example of a three-dimensional radiation pattern 550 of the first antenna 515 for an operating frequency of 60 GHz (gigahertz). The radiation pattern 550 is a simulation of the dependence of the field strength of the radar beam on the direction of its spatial power flow starting from an origin of the radar beam (the phase center of the first antenna 515). The radiation pattern 550 illustrates said dependence by means of a grayscale. The intensity strength (darkness) of the gray in a point of the surface indicates the field strength of radiation emitted by the first antenna towards said point. The darker the gray, the higher is the field strength.

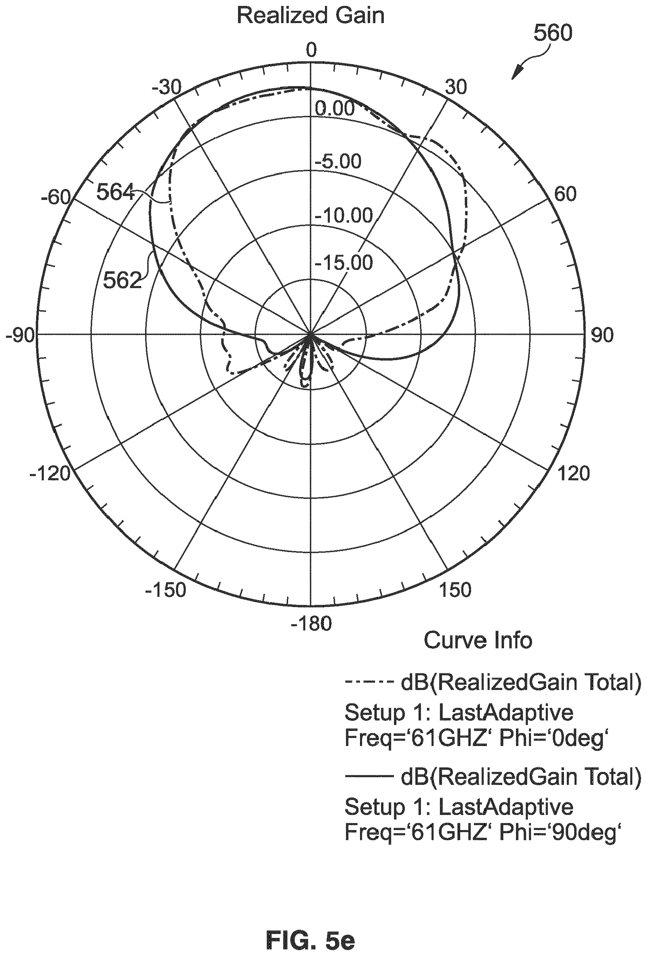

In Fig. 5b, the radiation pattern 550 for the radar system 500 as a standalone system, i.e., without the reflector 530, is shown. Thereby, the radiation pattern 550 exhibits a nearly spherical surface encompassing the phase center of the first antenna 515. In Fig. 5b, the field strength of the radar beam is highest in a circular area around a vertical projection of the phase center onto the spherical surface, i.e., most of the radiation power is emitted upwards. This is also shown by **Fig. 5e** which illustrates a polar diagram 560 of a first directive gain 562 and a second directive gain 564 of the first antenna 515 without reflector 530 in two vertical planes through the phase center orthogonal to one another, i.e., the polar diagram 560 of Fig. 5e represents two vertical cross sections of the radiation pattern 550 of Fig. 5b. A radial distance of a boundary point of the first directive gain 562 and the second directive gain 564 from the origin of the polar diagram 560 in any direction represents the field strength of radiation emitted in that direction. The higher the radial distance, the higher is the field strength for the corresponding direction. The field strength is represented logarithmically along the axis of the polar diagram 560, i.e., the polar diagram 560 has a logarithmic scale.

The first directive gain 562 and the second directive gain 564 exhibit a main lobe whose extent mainly covers a range between -50 degrees to +50 degrees and elongates upwards (0 degrees), i.e., most of the radiation power is emitted upwards and only little radiation power is distributed horizontally.

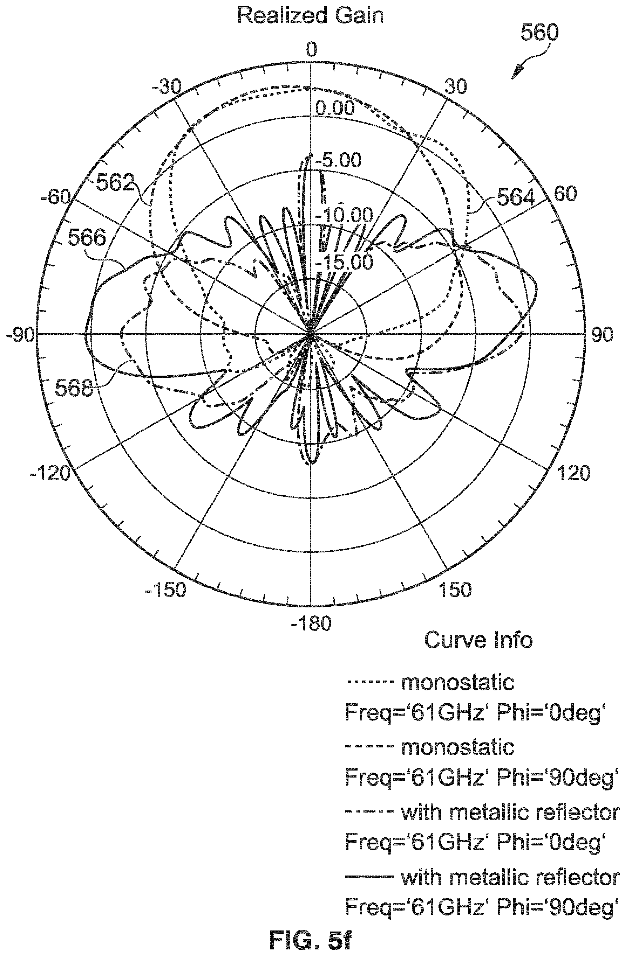

In Fig. 5d, the radiation pattern 550 for the first antenna 515 with the reflector 530 is shown. The radiation pattern 550 is a spherical segment centered above the phase center and cut off by the surface of the reflector 530, i.e., the radiation pattern 550 forms a ring which circulates the phase center and is opened upwards. The field strength is highest in a horizontal plane through the tip of the reflector 530 and decreases with increasing distance to said horizontal plane. Since the reflector 530 has a rotationally symmetrical shape, the radiation power of the radar beam is distributed (nearly) uniformly over an angular range of 360 degrees along the horizontal plane viewed from the phase center. The reflector 530, thus, enables a redirection of the radiation power towards the sides of the radar sensor. This is also shown by Fig. 5f which illustrates a polar diagram 560 of the first directive gain 562 and the second directive gain 564 and, additionally, of a third directive gain 566 and a fourth directive gain 568 of the first antenna 515 combined with the reflector 530 in the same two vertical planes like of Fig. 5e. The third directive gain 566 and the fourth directive gain 568 show two similarly sized and shaped main lobes on opposing sides relative to a zero axis of the polar diagram 560. The main lobes extend mainly towards a range from +80 degrees to +100 degrees and -80 degrees to -100 degrees, i.e., the radiation power is mainly emitted laterally.

The radar system 500 may further comprise a second antenna (not shown) configured to receive a reflection of the radar beam. The second antenna may, e.g., be oriented horizontally. By using the reflector 530, the radar system 500 may increase a detection range in a horizontal plane around the radar sensor. Additionally, the reflector 530 may decrease a sensitivity of the radar sensor for the main radiation direction of a setup without the reflector 530 (Fig. 5a and Fig. 5b).

A direction of the reflected radar signal and, consequently, a position and shape of the target region may be mainly dependent on a shape and position of the reflector 530. Conversely, the shape and position of the reflector 530 may be modified to obtain an intended radiation pattern. In the example of Fig. 5a to Fig. Sf, the tilt angle between a trajectory outgoing from the reflector 530 and a trajectory of the initial radar beam is approximately 90 degrees, resulting in a target region mainly extending along a horizontal plane around the radar sensor. Depending on requirements of a radar application, the preferred tilt angle may differ from 90 degrees. The tilt angle may be adjusted by a suitable selection of a shape of the reflector 530, or more specifically, of an opening angle with which the reflector 530 tapers towards the radar sensor.

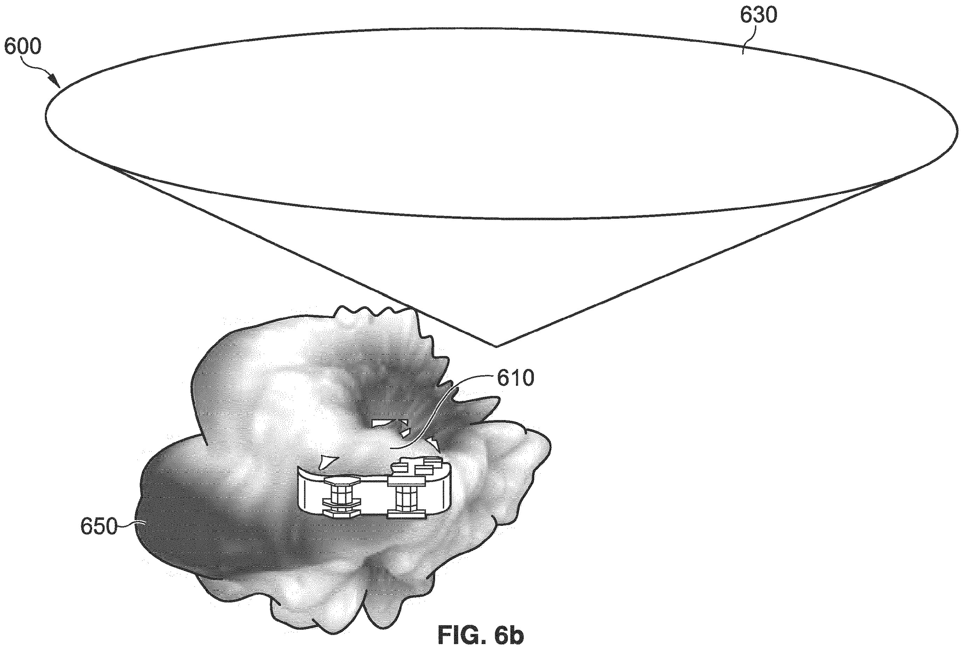

**Fig. 6a** and **Fig. 6b** illustrate a side view and an oblique top view, respectively, of an example of a radar system 600. The radar system 600 comprises a radar sensor with a semiconductor die 610 integrating a first antenna configured to emit a radar beam towards a predefined region. The radar system 600 comprises a reflector 630 configured to redirect at least part of the radar beam towards a target region different from the predefined region.

The radar system 600 exhibits a configuration similar to the radar system 500 described above except that the reflector 630 is displaced with respect to a phase center of the first antenna. More specifically, the reflector 630 is symmetrical with respect to a line of symmetry 660 and the line of symmetry 660 is displaced, e.g., by 5 millimeters, with respect to a beam axis 665 through the phase center of the first antenna. The reflector 630 is only slightly displaced such that it is at least partly placed in the predefined region, i.e., such that at least part of the radar beam impinges on the surface of the reflector 630.

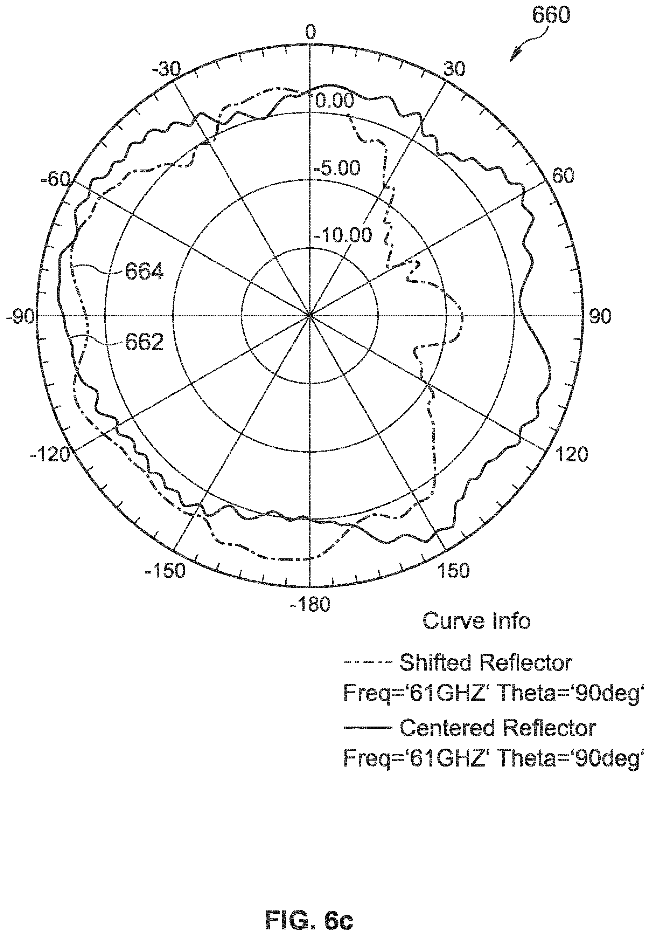

Fig. 6b additionally illustrates a three-dimensional radiation pattern 650 of the radar sensor 610. The radiation pattern 650 appears as a segment of a sphere encompassing the phase center and cut off by a surface of the reflector 630. The field strength of the radiation is especially high along a horizontal plane through the phase center, i.e., a radiation power of the radar beam is mainly focused on one side of the radar sensor 610. This is also shown by **Fig. 6c** which illustrates a polar diagram 660 of a first directive gain 662 of the radar system 500 of Fig. 5c with a centered reflector and a second directive gain 664 of the radar system 600 with the displaced reflector 630. The polar diagram 660 represents a horizontal plane through the phase center of the respective first antenna. The first directive gain 662 shows an approximately uniform distribution of the radiation power over the entire angular range whereas the second directive gain 664 has a limited angular range from -180 degrees to 0 degrees.

A displacement of the reflector 630 relative to the phase center may cause a radiation power of the radar beam to be focused more on a particular side of the radar sensor. This effect may be used to shape the radiation pattern as desired. For example, in an application where an angular range of, e.g., 180 degrees viewed from the phase center is required, the reflector 630 may be placed outside a centered position relative to the phase center. The radar system 600 may be useful for applications where a device comprising the radar system 600 has a fixed position and is placed close to an obstacle. Then, a focus of the radiation power away from the obstacle may be beneficial to increase a detection distance for a side of the radar sensor opposing the obstacle.

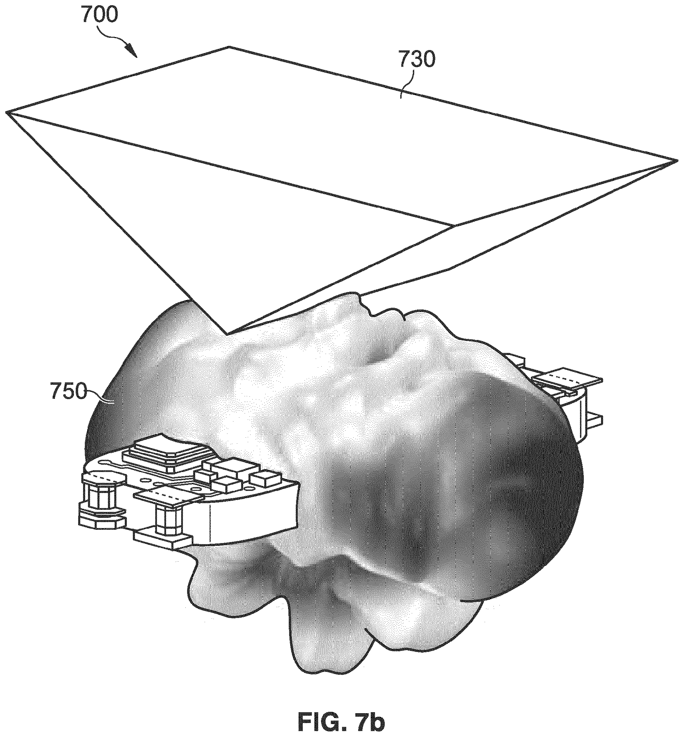

**Fig. 7a** and **Fig. 7b** illustrate an oblique top view of an example of a radar system 700. The radar system 700 comprises a radar sensor with a semiconductor die 710 integrating a first antenna configured to emit a radar beam towards a predefined region. The radar system 700 further comprises a second antenna (not shown) configured to receive a reflection of the radar beam. The radar system 700 comprises a reflector 730 configured to redirect at least part of the radar beam towards a target region different from the predefined region.

The radar system 700 exhibits a configuration similar to the radar system 500 of Fig. 5c except that the reflector 730 exhibits a prismatic shape (shape of a triangular prism) centered above a phase center of the first antenna. The tapering of the reflector 730 is an edge pointing towards the first antenna. More specifically, the reflector 730 is symmetrical with respect to a line of symmetry and the line of symmetry extends through the phase center of the first antenna.

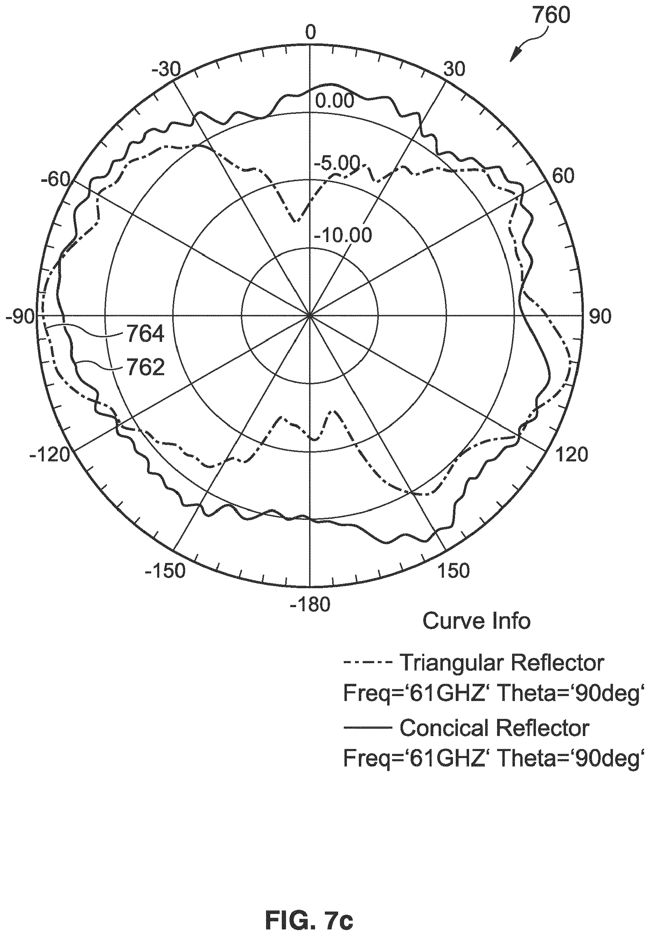

Fig. 7b additionally illustrates a three-dimensional radiation pattern 750 of the radar sensor. The radiation pattern 750 exhibits two separated spherical segments which are opposing with respect to the radar sensor. Accordingly, the resulting target region may comprise two subregions which are opposing with respect to the phase center of the first antenna. This is also shown by **Fig. 7c** which illustrates a polar diagram 760 of a first directive gain 762 of the radar system 500 of Fig. 5c with a conical reflector and a second directive gain 764 of the radar system 700 with the prismatic reflector 730. The polar diagram 760 represents a horizontal plane through the phase center of the respective first antenna. The first directive gain 762 shows an approximately uniform distribution of the radiation power over the entire angular range whereas the second directive gain 764 exhibits two opposing lobes with an angular range from approximately -30 degrees to -150 degrees and from +30 degrees to +150 degrees, respectively, thus, an angular range from -30 degrees to +30 degrees and from +150 degrees to -150 degrees (clockwise) is excluded from detection.

The radar system 700 may create separated areas of radar coverage based on a geometry of the reflector 730. In other examples, a radar system according to the present disclosure may create any number of separated subregions for detection with any respective angular range. This may be advantageous for applications requiring certain regions to be excluded from detection or to focus radar power on certain regions of interest.

Referring back to Fig. 1a and Fig. 1b, the distance between the first antenna 115 and the reflector 130 may be selected according to requirements of the target application, e.g., according to an operating frequency of the radar sensor 110. On the one hand, a maximum distance (e.g., 5 centimeters) between the reflector 130 and the first antenna 115 may be specified such that a size of the reflector 130 (which may be selected according to the distance) is suitable for the target application and that an efficiency loss of the radar sensor 110 is acceptable for the target application. On the other hand, the reflector 130 may be arranged relative to the first antenna 115 such that a minimum distance between the first antenna 115 and the reflector 130 is met. This minimum distance may be selected such that the reflector 130 is in the far field of the first antenna 115. This may ensure that the radar beam 120 propagates in free space without disturbance. The minimum distance may depend on the operating frequency of the radar sensor 110 and physical dimensions of the first antenna 115.

In some examples, the reflector 130 may be formed as a solid metal piece. For high-frequency radar applications, a thin metal layer may be sufficient to provide a suitable reflection behavior. For example, the reflector 130 may be fabricated of any material such as a polymer by, e.g., 3D-printing or injection molding, and covered by a metallic coating or foil. This may reduce the weight and the production cost of the reflector 130. The (outer) surface of the reflector 130 may preferably be even for improving the reflection behavior. In some examples, the surface of the reflector 130 may exhibit a metallic grid structure. This may be advantageous for applications where the reflector 130 is required to be partly optical transparent, e.g., in cases where the reflector 130 is implemented into a layer of a display.

The radar system 100 may be applicable to several radar scenarios. For instance, the radar sensor 110 may be configured to determine, based on the reflection of the radar beam 120, at least one of a presence, a movement (e.g., a velocity), a position (e.g., a direction) and a distance of an object in an environment of the radar system 100. The radar sensor 110 may detect, e.g., a presence or a motion of a person in a surrounding of the radar system 100. A distance between the radar system 100 and an object may be determined, e.g., by using FSK (frequency-shift keying) or FMCW (frequency-modulated continuous wave) modulation.

The radar system 100 may enable a simple and cost-effective adjustment of a field of view of the radar sensor 110 to requirements of a particular radar application. For example, in applications where an angular range of detection, e.g., over 120 degrees, is desirable, the radar system 100 may provide a low-cost solution for widening up the original angular range of the radar sensor 110. Or, in case the radar sensor 110 is integrated into a device and - due to design considerations of the device - exhibits an orientation or position which by itself is impractical for the radar task, e.g., when objects in a region outside a field of view of the radar sensor 110 shall be detected, a suitable deployment of the reflector 130 may, however, enable the fulfillment of the radar task. In particular, the radar system 100 may enable a lateral detection of objects, i.e., a detection of objects which are located to a side of the radar sensor 110 with respect to its orientation. The radar system 100 may detect objects which are located in a "blind spot" of the radar sensor 110, thus, in a region which is not directly available for detection by the radar sensor 110 itself. Additionally, the radar system 100 may explicitly exclude parts of the field of view of the radar sensor 110 from detection without substantially worsen its power efficiency.

The radar system 100 may further use multiple second (Rx) antennas in and endfire implementation to enable an identification of a position of an object in the target region, e.g., in a 360 degrees view, using only a single PCB.

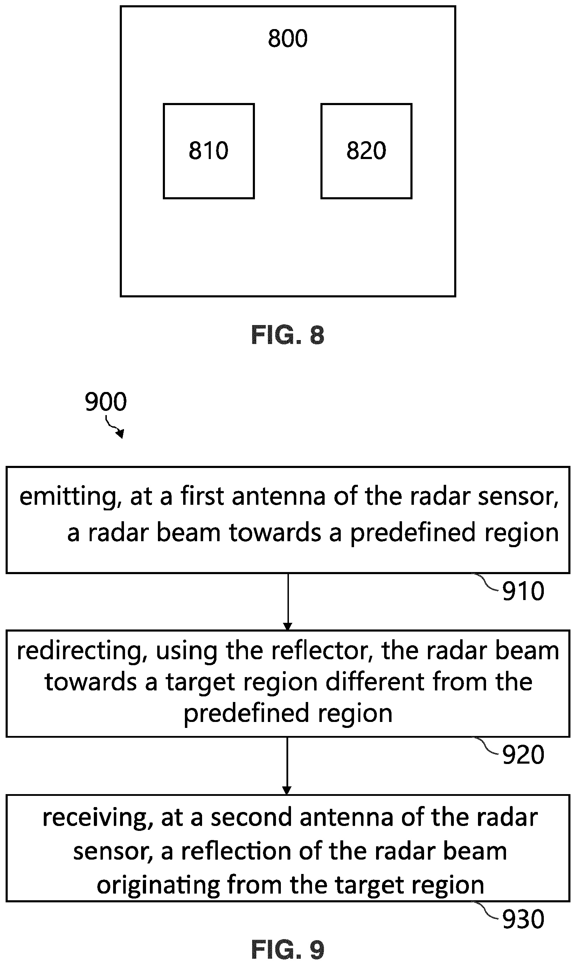

**Fig. 8** illustrates an electronic device 800 comprising a radar system 810 as described herein, such as radar system 100, 200, 300, 400, 500, 600 or 700 and control circuitry 820 configured to control an operation of the electronic device 800 based on an output signal of the radar system 810. The radar system 810 comprises a radar sensor and a reflector as described above, e.g., with reference to Fig. 1a and Fig. 1b. The radar sensor comprises a first antenna which is configured to emit a radar beam to a predefined region. The reflector is configured to redirect at least part of the radar beam towards a target region. The radar sensor comprises a second antenna which is configured to receive a reflection of the radar beam.

The control circuitry 820 may be a single dedicated processor, a single shared processor, or a plurality of individual processors, some of which or all of which may be shared, a digital signal processor (DSP) hardware, an application specific integrated circuit (ASIC) or a field programmable gate array (FPGA). The control circuitry 820 may optionally be coupled to, e.g., read only memory (ROM) for storing software, random access memory (RAM) and/or non-volatile memory. The control circuitry 820 is communicatively coupled to the radar system 810.

The electronic device 800 may be any device with a radar function. The electronic device 800 may be, e.g., a consumer device. The electronic device 800 may be, e.g., an audio equipment (e.g., a speaker), a telecommunication device (e.g., a television receiver), a robot, a drone, or a fire detector.

The radar system 810 may be configured to determine at least one of a presence, a movement, a position and a distance of an object in an environment of the electronic device 800. Optionally, the radar system 810 may determine a number of objects in the environment of the electronic device 800. For instance, the redirected radar beam may impinge on the object and reflect back to the second antenna. The second antenna of the radar sensor may receive the reflection and generate the output signal based on the received reflection. The radar system 810 may, then, transfer the output signal to the control circuitry 820 for further processing.

The radar system 810 may be configured to determine the at least one of presence, the movement, and the distance of the object in an immediate surrounding of the electronic device 800, e.g., in a distance of up to a few meters (e.g., 4 or 5 meters) to the electronic device 800. The radar system 810 may be configured to detect presence of a user of the electronic device 800. For instance, the radar system 810 may be configured to determine whether a person is present in a certain area around the electronic device 800 and, optionally, determine whether that person approaches the electronic device 800 or moves away from the electronic device 800. Optionally, the radar system 810 may determine from which direction a person approaches the electronic device 800 or to which direction a person moves away from the electronic device 800. The radar system 810 may further perform 360 degrees people tracking or segmentation, collision avoidance in case of a robot or drone, moving and/or static target detection.

The control circuitry 820 may control the operation of the electronic device 800, e.g., by activating or deactivating a certain function of the electronic device 800 based on the output signal, e.g., a certain function may be activated if it is determined that a user of the electronic device 800 is present. For instance, the control circuitry 820 may, if it is determined that a user is close, skip key word activation or automatically play music, activate air-conditioning, heating or alike. The control circuitry 820 may monitor a distance to a user based on the output signal (follow-me function). The electronic device 800 may have a (wireless) connection to other electronic devices in its surrounding and communicate the distance to the other electronic devices in order to determine which of the electronic devices is closest to the user, e.g., for connecting a microphone of the determined electronic device with a mobile phone of the user for phone calls. The electronic device 800 may be a speaker and be connected to other speakers in its surrounding to enable a dynamic handover of an audio output to one of the speakers closest to the user.

In case the electronic device 800 comprises a microphone, the control circuitry 820 may, based on a number of detected persons or on a detected position of a person, limit a microphone beam towards the person to optimize a voice quality. In case the electronic device 800 comprises a light source, the control circuitry 820 may adjust the light source for a desired ambient light in the area of presence of the detected person. In case the electronic device 800 comprises a heating or cooling device, the control circuitry 820 may control the heating or cooling device based on the number of detected persons.

The electronic device 800 may have a fixed orientation, e.g., a certain surface area of the electronic device 800 may be designed for an orientation to a certain direction, e.g., vertically upwards or downwards, or horizontally to a certain side. The orientation may be dependent on a surrounding where the electronic device 800 is operated, e.g., the electronic device 800 may be designed for an orientation away from an obstacle such as a wall or towards an area of interest inside a room. The radar system 810 may be integrated into a certain side of the electronic device 800, thus, the fixed orientation of the electronic device 800 may imply a similarly fixed orientation of the radar sensor.

The integration of the radar system 810 may be selected according to design considerations which may be opposed to the radar function, i.e., the orientation of the radar sensor may, per se, be impractical for the radar application. For instance, the radar system 810 may be integrated into a top side of the electronic device 800 resulting in an upward orientation of the radar sensor even though objects lateral to the electronic device 800 shall be detected. Or the radar function may require a target region differing from a field of view of the radar sensor, e.g., with an angular range of more than 120 degrees. In such cases, the radar system 810 may overcome a limitation of a conventional radar system by providing the possibility to freely define the target region for matching the requirements of the radar function.

For instance, the radar system 810 may be configured to detect presence of a user in a proximity to the electronic device 800. The radar system 810 may be integrated into a top side of the electronic device 800, i.e., facing upwards. The reflector of the radar system 810 may provide a coverage of 360 degrees around the electronic device 800, i.e., it may be capable of detecting a user lateral to the electronic device 800 in any direction.

In some scenarios, a position of the electronic device 800 may be intended to be mostly fixed and a limited target region in front of the electronic device 800 may be relevant for monitoring presence of a user. In other scenarios, the electronic device 800 may be expected to be placed centered inside a room or, potentially, be moved with respect to its position and orientation. For any of those scenarios, the radar system 810 may provide a suitable method for detection of an object in an area of interest without the use of multiple sensors, reducing costs and power consumption of the electronic device 800.

The radar system 810 may also prevent unwanted detection of objects by excluding certain regions around the electronic device 800 from detection. For instance, the radar system 810 may suppress an unwanted detection of movements of, e.g., a fan on the ceiling or a cleaning robot and pet on the floor, without extensive data processing effort or efficiency loss. The radar system 810 may allow immunity to detection of objects in an original field of view of the radar sensor. Besides, the radar system 810 may increase a sensitivity of the radar sensor for a desired target region different from a field of view of the radar sensor.

Using the radar system 810 may especially be beneficial for applications requiring a wide detection range over a solid angle of more than 120 degrees with a high sensitivity for the boundary area of the detection range. A conventional approach to fulfill this requirement may be the use of multiple radar sensors, e.g., 3 or 4 sensors: Each of the radar sensors may cover a limited part of the total target region. Another conventional approach may be the use of a sensor with multiple channels where each channel is connected to a respective antenna. The antennas may be placed such that each of the antenna may cover a limited part of the total target region. In contrast to the conventional approach, the radar system 810 may decrease hardware costs, space inside the electronic device 800 and power consumption. A simple geometry of the reflector may be suitable for most applications; thus, the fabrication of the reflector may be fast and cost-effective.

Another approach to fulfill the aforementioned requirement could be a radar sensor coupled to a dielectric or metallic waveguide. The dielectric waveguide may redirect the radar beam to a target region. Compared to the latter approach, the reflector of the radar system 810 may be simpler to fabricate. Besides, the radar system 810 may be operable with a common radar sensor whereas matching issues may occur when using the waveguide.

Fig. 9 illustrates a flowchart of an example of a method 900 for operating a radar system, such as the radar system 100 described above, comprising a radar sensor and a reflector spaced apart from the radar sensor. The method 900 comprises emitting 910, at a first antenna of the radar sensor, a radar beam towards a predefined region, redirecting 920, using the reflector, the radar beam towards a target region different from the predefined region, and receiving 930, at a second antenna of the radar sensor, a reflection of the radar beam originating from the target region

More details and aspects of the method 900 are explained in connection with the proposed technique or one or more examples described above, e.g., with reference to Fig. 1a and Fig. 1b. The method 900 may comprise one or more additional optional features corresponding to one or more aspects of the proposed technique, or one or more examples described above.

Methods and apparatuses disclosed herein may provide a simple and cost-effective adjustment of a field of view of a radar sensor to match requirements of a particular radar application. For instance, the methods and apparatuses may enable a detection of objects lateral to the radar sensor. Additionally, the methods and apparatuses may enable immunity of the radar sensor to certain parts of the original field of view of the radar sensor without substantially worsen the power efficiency of the radar sensor.

In the following, some examples of the proposed concept are presented:
An example (e.g., example 1) relates to a radar system comprising a radar sensor comprising a first antenna configured to emit a radar beam towards a predefined region, and a reflector spaced apart from the radar sensor and configured to redirect at least part of the radar beam towards a target region different from the predefined region, wherein the radar sensor comprises a second antenna configured to receive a reflection of the radar beam originating from the target region.

Another example (e.g., example 2) relates to a previous example (e.g., example 1) or to any other example, further comprising that the first antenna and the second antenna are spaced apart from each other.

Another example (e.g., example 3) relates to a previous example (e.g., one of the examples 1 or 2) or to any other example, further comprising that the second antenna is configured to receive a direct reflection of the radar beam originating from the target region.

Another example (e.g., example 4) relates to a previous example (e.g., one of the examples 1 to 3) or to any other example, further comprising that the second antenna is an endfire antenna.

Another example (e.g., example 5) relates to a previous example (e.g., one of the examples 1 to 4) or to any other example, further comprising that the second antenna is a yagi antenna.

Another example (e.g., example 6) relates to a previous example (e.g., one of the examples 1 to 5) or to any other example, further comprising that the radar sensor comprises at least two second antennas configured to receive the reflection of the radar beam from respective subregions of the target region.

Another example (e.g., example 7) relates to a previous example (e.g., example 6) or to any other example, further comprising that the first antenna comprises an emitting surface configured to emit the radar beam, wherein the target region extends over at least 120 degrees along a plane parallel to the emitting surface when viewed from a phase center of the first antenna, and wherein the at least two second antennas are configured to receive the reflection of the radar beam exclusively from a respective subregion of the target region extending over at least 60 degrees along the plane parallel to the emitting surface.

Another example (e.g., example 8) relates to a previous example (e.g., example 7) or to any other example, further comprising that the target region extends over 360 degrees along the plane parallel to the emitting surface, and wherein the radar sensor comprises at least four second antennas configured to receive the reflection of the radar beam exclusively from a respective subregion of the target region extending over at least 90 degrees along the plane parallel to the emitting surface.

Another example (e.g., example 9) relates to a previous example (e.g., one of the examples 1 to 8) or to any other example, further comprising that the target region comprises two subregions which are opposing with respect to a phase center of the first antenna, and wherein the at least two antennas are configured to receive the reflection of the radar beam exclusively from a respective one of the two subregions.

Another example (e.g., example 10) relates to a previous example (e.g., one of the examples 1 to 9) or to any other example, further comprising that an imaginary line between a phase center of the first antenna and any boundary point of the predefined region is tilted by at least 10 degrees with respect to an imaginary line between the phase center and any boundary point of the target region.

Another example (e.g., example 11) relates to a previous example (e.g., one of the examples 1 to 10) or to any other example, further comprising a printed circuit board, PCB, wherein the first antenna and the second antenna are arranged in or on the PCB.

Another example (e.g., example 12) relates to a previous example (e.g., example 11) or to any other example, further comprising a semiconductor die arranged in or on the PCB, wherein at least one physical channel of the radar sensor coupled to at least one of the first antenna and the second antenna is integrated into the semiconductor die, and wherein the at least one of the first antenna and the second antenna is external to the semiconductor die.

Another example (e.g., example 13) relates to a previous example (e.g., one of the examples 11 or 12) or to any other example, further comprising that the second antenna is arranged on an edge area of the PCB.

Another example (e.g., example 14) relates to a previous example (e.g., one of the examples 11 to 13) or to any other example, further comprising that the radar sensor comprises at least four second antennas configured to receive the reflection of the radar beam, and wherein the at least four second antennas are arranged symmetrically on the PCB with respect to the first antenna.

Another example (e.g., example 15) relates to a previous example (e.g., one of the examples 1 to 14) or to any other example, further comprising that the radar sensor is configured to determine, based on the reflection of the radar beam, at least one of a presence, a movement, a position and a distance of an object in an environment of the radar system.

Another example (e.g., example 16) relates to a previous example (e.g., one of the examples 1 to 15) or to any other example, further comprising that the reflector tapers towards the radar sensor.

Another example (e.g., example 17) relates to a previous example (e.g., one of the examples 1 to 16) or to any other example, further comprising that the reflector tapers towards an apex or an edge oriented towards the radar sensor.

Another example (e.g., example 18) relates to a previous example (e.g., one of the examples 1 to 17) or to any other example, further comprising that the reflector is symmetrical with respect to a line of symmetry or a plane of symmetry.

Another example (e.g., example 19) relates to a previous example (e.g., example 18) or to any other example, further comprising that the line of symmetry or the plane of symmetry extends through a phase center of the first antenna.

Another example (e.g., example 20) relates to a previous example (e.g., example 18) or to any other example, further comprising that the line of symmetry or the plane of symmetry is displaced with respect to a phase center of the first antenna.

Another example (e.g., example 21) relates to a previous example (e.g., one of the examples 1 to 20) or to any other example, further comprising that the reflector comprises an outer surface configured to redirect the at least part of the radar beam, and wherein at least the outer surface of the reflector is metallic.

Another example (e.g., example 22) relates to a previous example (e.g., one of the examples 1 to 21) or to any other example, further comprising that the reflector spatially extends over an entire beamwidth of the radar beam.

An example (e.g., example 23) relates to an electronic device comprising a radar system according to a previous example (e.g., one of the examples 1 to 22) or to any other example, and control circuitry configured to control an operation of the electronic device based on an output signal of the radar system.

An example (e.g., example 24) relates to a method for operating a radar system comprising a radar sensor and a reflector spaced apart from the radar sensor, the method comprising emitting, at a first antenna of the radar sensor, a radar beam towards a predefined region, redirecting, using the reflector, the radar beam towards a target region different from the predefined region, and receiving, at a second antenna of the radar sensor, a reflection of the radar beam originating from the target region.

The aspects and features described in relation to a particular one of the previous examples may also be combined with one or more of the further examples to replace an identical or similar feature of that further example or to additionally introduce the features into the further example.

It is further understood that the disclosure of several steps, processes, operations, or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process, or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A radar system (100) comprising:
a radar sensor (110) comprising a first antenna (115) configured to emit a radar beam (120) towards a predefined region; and
a reflector (130) spaced apart from the radar sensor (110) and configured to redirect at least part of the radar beam (120) towards a target region different from the predefined region,
wherein the radar sensor (110) comprises a second antenna (117) configured to receive a reflection of the radar beam (120) originating from the target region.

2. The radar system (100) of claim 1, wherein the first antenna (115) and the second antenna (117) are spaced apart from each other.

3. The radar system (100) of any one of the previous claims, wherein the second antenna (117) is configured to receive a direct reflection of the radar beam (120) originating from the target region.

4. The radar system (100) of any one of the previous claims, wherein the second antenna (117) is an endfire antenna.

5. The radar system (100) of any one of the previous claims, wherein the second antenna (117) is a yagi antenna.

6. The radar system (100) of any one of the previous claims, wherein the radar sensor (110) comprises at least two second antennas configured to receive the reflection of the radar beam (120) from respective subregions of the target region.

7. The radar system (100) of claim 6, wherein the first antenna (115) comprises an emitting surface configured to emit the radar beam (120), wherein the target region extends over at least 120 degrees along a plane parallel to the emitting surface when viewed from a phase center of the first antenna (115), and wherein the at least two second antennas are configured to receive the reflection of the radar beam (120) exclusively from a respective subregion of the target region extending over at least 60 degrees along the plane parallel to the emitting surface.

8. The radar system (100) of claim 7, wherein the target region extends over 360 degrees along the plane parallel to the emitting surface, and wherein the radar sensor (110) comprises at least four second antennas configured to receive the reflection of the radar beam (120) exclusively from a respective subregion of the target region extending over at least 90 degrees along the plane parallel to the emitting surface.

9. The radar system (100) of any one of the previous claims, wherein the target region comprises two subregions which are opposing with respect to a phase center of the first antenna (115), and wherein the at least two antennas are configured to receive the reflection of the radar beam (120) exclusively from a respective one of the two subregions.

10. The radar system (100) of any one of the previous claims, wherein an imaginary line between a phase center of the first antenna (115) and any boundary point of the predefined region is tilted by at least 10 degrees with respect to an imaginary line between the phase center and any boundary point of the target region.

11. The radar system (100) of any one of the previous claims, further comprising a printed circuit board, PCB, wherein the first antenna (115) and the second antenna (117) are arranged in or on the PCB.

12. The radar system (100) of claim 11, further comprising a semiconductor die arranged in or on the PCB, wherein at least one physical channel of the radar sensor (110) coupled to at least one of the first antenna (115) and the second antenna (117) is integrated into the semiconductor die, and wherein the at least one of the first antenna (115) and the second antenna (117) is external to the semiconductor die.

13. The radar system (100) of any one of claims 11 or 12, wherein the radar sensor (110) comprises at least four second antennas configured to receive the reflection of the radar beam (120), and wherein the at least four second antennas are arranged symmetrically on the PCB with respect to the first antenna (115).

14. An electronic device (800) comprising:
a radar system (810) according to any one of claims 1 to 13; and
control circuitry (820) configured to control an operation of the electronic device based on an output signal of the radar system.

15. A method (900) for operating a radar system comprising a radar sensor and a reflector spaced apart from the radar sensor, the method comprising:
emitting (910), at a first antenna of the radar sensor, a radar beam towards a predefined region;
redirecting (920), using the reflector, the radar beam towards a target region different from the predefined region; and
receiving (930), at a second antenna of the radar sensor, a reflection of the radar beam originating from the target region.
